# EUROPEAN PATENT APPLICATION

(11) **EP 4 732 679 A1**
(43) Date of publication of application: **29.04.2026**
(21) Application number: 25210630.7
(22) Date of filing: 23.10.2025
(51) Int. Cl.: A23N 1/02, B02C 13/00, C11B 1/04

(54) **CRUSHER OF A CRUSHING MACHINE COMPRISING DIFFERENT TOOL SETS**

(30) Priority: 24.10.2024 IT 202400023754
(71) Applicant: PIERALISI MAIP SOCIETA' PER AZIONI, 60035 Jesi (AN) (IT)
(72) Inventor: GIARDINIERI, Simone, 60035 Jesi (AN) (IT); GASPARINI, Mauro, 60035 Jesi (AN) (IT); PIERPAOLI, Martina, 60019 Senigallia (AN) (IT)
(74) Representative: Baldi, Claudio

(57) **Abstract**

Crusher (100) of a crushing machine (M); said crusher (100) comprises at least three sets of arms (3a, 3b, 3c, 3d) arranged side by side along the hub (1), namely a rear set of arms (3a), a front set of arms (3b), and at least one central set of arms (3c, 3d); wherein conveyor tools (4b) are connected to the rear and front sets of arms (3a, 3b) to push the material disposed in the crushing chamber (M1) towards the central sets of arms (3c, 3d), whereas cutting tools (4a) are disposed on the at least one central set of arms (3c, 3d) to intercept and crush the material conveyed by the conveyor tools (4b) during the rotation of the crusher (100).

## Description

The present patent application for industrial invention relates to a crusher of a crushing machine comprising different tool sets.

The sector of reference is the oil sector, i.e., the sector that processes oleaginous fruits, such as olives and the like, in order to obtain oil.

As it is known, both in the oil industry and in other vegetable oleaginous sources, olives or oleaginous fruits undergo a preliminary treatment, which is known as crushing, to break the fruits with the pit and produce a paste that is used in a subsequent kneading process.

The present invention relates specifically to the crushing of oleaginous fruits.

As it is known, crushing is used to break down oleaginous fruits, in particular olives, in order to release the oil contained in the vacuoles of the oleiferous cells. Moreover, crushing releases the endogenous enzymes that are responsible for the formation of the chemical and sensory characteristics of the oil (lipoxygenase, glycosidase, hydrolase, polyphenol oxidase, and peroxidase).

Currently, the most popular crushing machines comprise a crushing chamber where the oleaginous fruits are crushed to obtain the paste. The crushing chamber is bounded by a cylindrical grid perimetrically, by a rear wall posteriorly, and by a front wall, anteriorly.

A rotating crusher is arranged inside the crushing chamber and comprises:
- a central hub connected to a shaft of the crushing machine;
- radial arms protruding from the central hub and all lying on the same plane orthogonal to the axis of the central hub; and
- tools fixed to the radial arms.

Depending on the type of tools used on the radial arms, crushing machines are divided into knife crushing machines and hammer crushing machines.

In both cases, the crusher is rotated in such a way that the fruits are crushed inside the crushing chamber until a paste is obtained and expelled through the holes in the cylindrical grid because of the centrifugal force.

Regardless of the type of tools used, both knife and hammer machines are impaired by the same drawback. In fact, during the rotation of the crusher, part of the material contained inside the crushing chamber is deposited on the surface of the rear wall and on the surface of the front wall of the crushing chamber and adheres to these surfaces without passing through the holes of the cylindrical grid.

Obviously, the deposit of such a material reduces the yield of the crushing machine and therefore the machine is unsatisfactory.

ITRM990679A1 describes an olive crusher with rotating grid and movable knives, of modular type, with integrated pre-crushing device.

EP0581758A1 describes a machine and a process for producing olive oil without crushing stones, in which the oil is extracted using water.

The purpose of the present invention is to solve the problems of the prior art by devising a new efficient crusher that is capable of reducing the amount of material that adheres to the front wall and to the rear wall of the crushing chamber.

Another purpose of the present invention is to devise a versatile, effective, and simple-to-manufacture crusher.

These purposes are achieved in accordance with the invention with the features listed in the attached independent claim 1.

Advantageous embodiments appear from the dependent claims.

The crusher according to the invention is defined by claim 1.

For greater clarity, the description of the crusher according to the invention continues with reference to the attached drawings, which are for illustrative purposes only and are not limiting, wherein:
Fig. 1 is an exploded axonometric view of the crusher according to the invention;
Fig. 2 is an axonometric view of the crusher of Fig. 1 in assembled condition;
Fig. 3 is an axonometric view of the crusher according to the invention disposed inside a crushing chamber of a crushing machine;

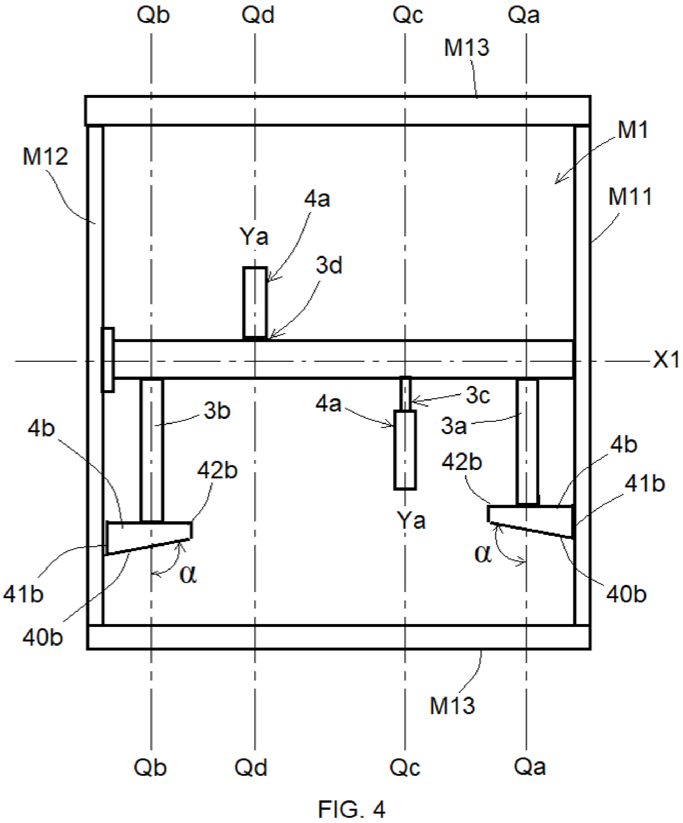

Fig. 4 is a diagrammatic top view of the orientation of the different types of crusher blades inside the crushing chamber of a crushing machine;
Fig. 5 shows different types of tools that can be mounted on the arms of the central sets of the crusher;

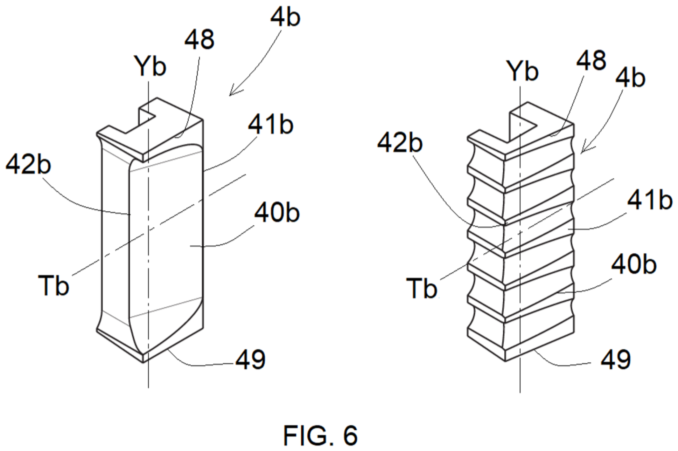

Fig. 6 shows different types of tools that can be mounted on the arms of the lateral sets of arms of the crusher.

With reference to the attached figures, the crusher according to the invention, which is generally indicated with reference numeral (100), is described.

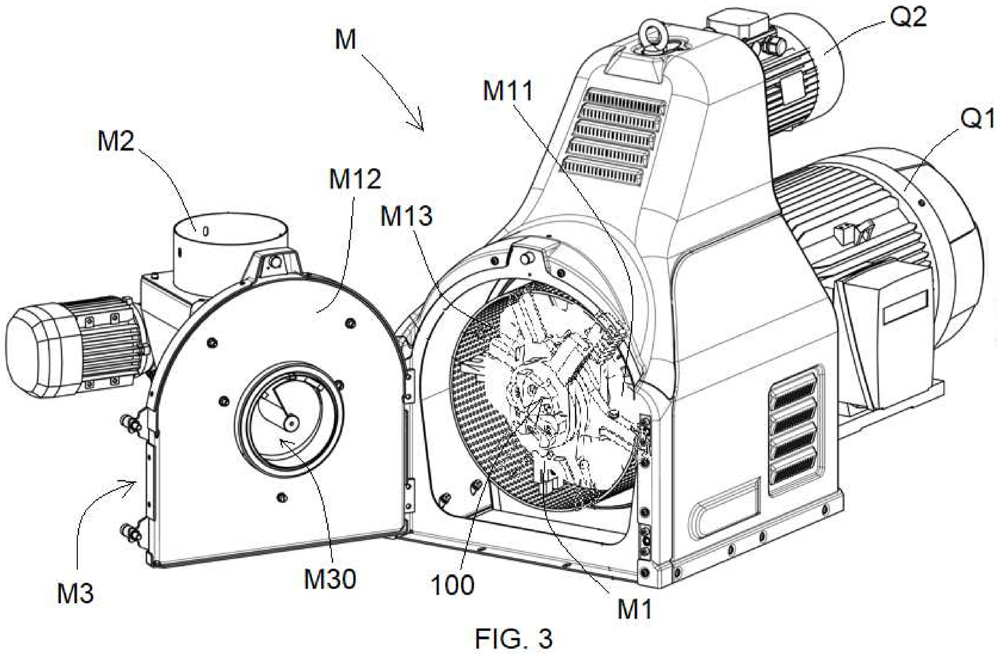

The crusher (100) according to the invention is suitable for being an integral part of a crushing machine (M) shown in particular in Fig. 3.

The crushing machine (M) comprises:
- a crushing chamber (M1) suitable for containing oleaginous fruits, in particular olives, that are crushed to obtain a paste; the crushing chamber (M1) is bounded by a rear wall (M11) posteriorly, by a front wall (M12) anteriorly, and by a cylindrical grid (M13) perimetrically;
- a shaft (A) passing through the rear wall (M11) of the crushing chamber (M1), said shaft (A) having an axis of rotation (X) and being suitable for being connected to first drive means (Q1) of the crushing machine so as to rotate about the axis of rotation (X);
- the crusher (100) according to the invention connected to the shaft (A),
- a front door (M3) that is suitable for closing the crushing chamber (M1) and defining said front wall (M12) of the crushing chamber (M1) when closed;
- a feed system for feeding the oleaginous fruits into the crushing chamber (M1); said feed system is mounted on the front door (M3) and comprises a hopper (M2) wherein the oleaginous fruits are loaded, and a large circular opening (M30) coaxial with the axis of the shaft (A) that ends into the crushing chamber (M1) to convey the oleaginous fruits loaded into the hopper (M2) into the crushing chamber (M1);
- a discharge outlet, which is not shown in the attached figures, for discharging the puree obtained from crushing the oleaginous fruits.

The crushing machine (M) may further comprise second drive means (Q2) suitable for rotating the cylindrical grid (M13) in the opposite direction with respect to the rotational direction of the shaft (A).

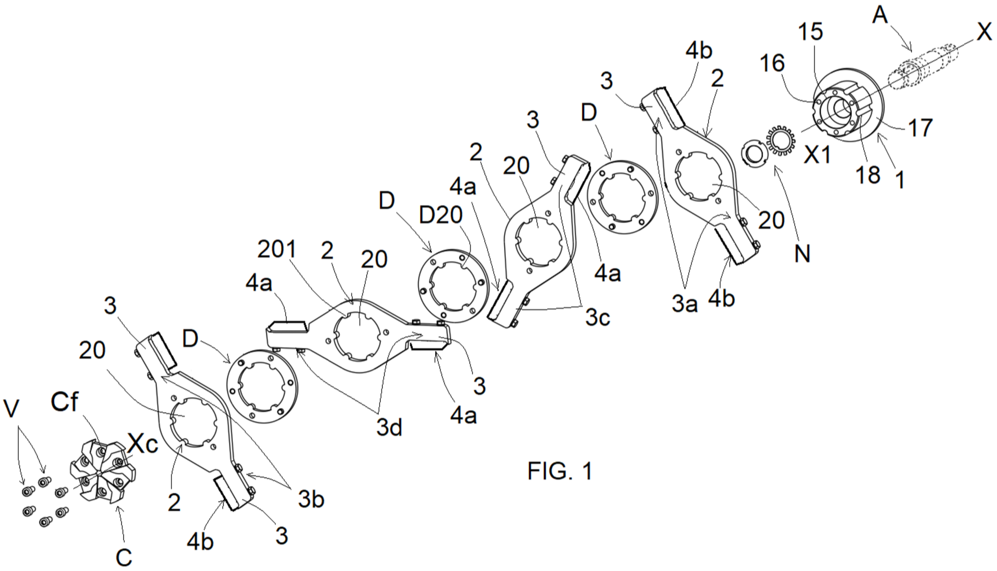

With reference to Fig. 1, the crusher (100) comprises a hub (1) with an axis (X1). The hub (1) is suitable for being integrally and rotatably connected to said shaft (A).

The hub (1) comprises an axial seat (10) suitable for fitting the shaft (A) and being integrally coupled to said shaft (A).

The hub (1) has an annular front edge (15) comprising threaded holes (16). The hub (1) comprises a stop flange (17) located at a rear end of the hub (1).

The crusher (100) further comprises a cover (C) disposed in opposite position to the front edge (15) of the hub (1) and having a central axis (Xc) coaxial with the axis (X1) of the hub (1). The cover (C) has through holes (Cf) aligned with the threaded holes (16) of the front edge (15) of the hub (1).

Screws (V) are inserted into the through holes (Cf) of the cover (C) and are screwed into the threaded holes (16) of the front edge (15) of the hub (1).

The crusher (100) further comprises arms (3) integral with the hub (1) and protruding from the hub (1).

In particular, the crusher (100) comprises at least three sets of arms (3a, 3b, 3c, 3d) arranged side by side along the hub (1), namely:
- a rear set of arms (3a) comprising one or more arms (3) lying on a rear plane (Qa) orthogonal to the axis (X1) of the hub (1);
- a front set of arms (3b) comprising one or more arms (3) lying on a front plane (Qb) orthogonal to the axis (X1) of the hub (1);
- two central sets of arms (3c, 3d) comprising one or more arms (3) lying on a central plane (Qc, Qd), which are interposed between the front plane (Qb) and the rear plane (Qa) and orthogonal to the axis (X1) of the hub (1).

In the embodiment of the invention shown in the attached figures, each set of arms (3a, 3b, 3c, 3d) is composed of two diametrically opposite arms (3).

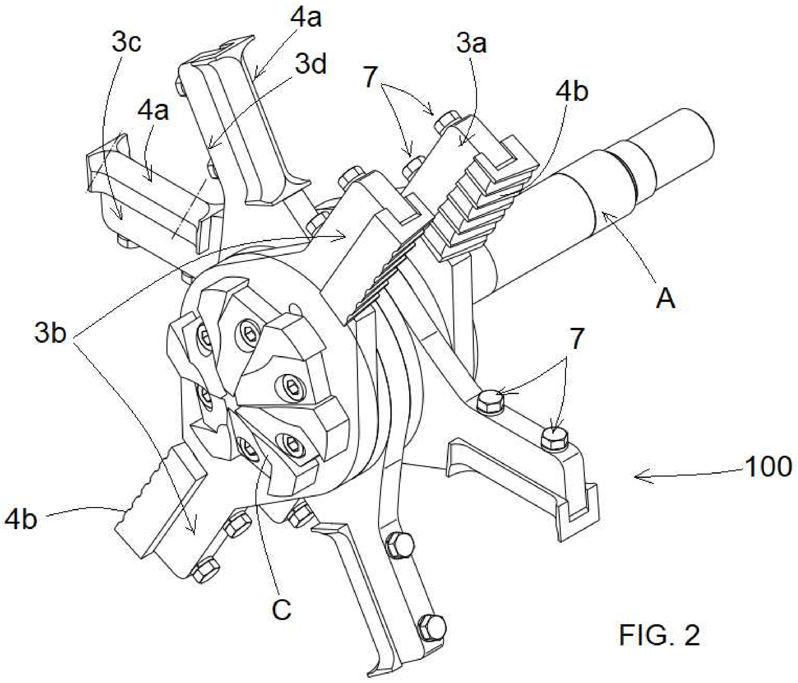

With reference to Fig. 2, the arms (3) of the central sets of arms (3c, 3d) are preferably offset with respect to each other and also with respect to the arms of the front set of arms (3b) and of the rear set of arms (3a).

Instead, the front set of arms (3b) and the rear set of arms (3a) are not offset with respect to each other.

Advantageously, the crusher (100) further comprises an arm-holding plate (2) for each set of arms (3a, 3b, 3c, 3d), incorporating the arms (3) of the respective sets of arms (3a, 3b, 3c, 3d).

Each arm-holding plate (2) has a central hole (20) suitable for fitting the hub (1).

Anti-rotational means (18, 201) integrally and rotatably connect the arm-holding plate (2) to the hub (1).

Said anti-rotational means (18, 201) are configured to provide a grooved coupling between the arm-holding plate (2) and the hub (1).

In particular, said anti-rotational means (18, 201) comprise:
- longitudinal grooves (18) formed on the outer surface of the hub (1);
- protuberances (201) that protrude from a perimeter edge (200) delimiting the hole (20) of the arm-holding plate (2) and are coupled with said longitudinal grooves (18) of the hub (1).

Spacers (D) may be arranged around the hub (1), each one having a hole (D1) suitable for fitting the hub (1). Coupling means (18, D20) integrally and rotatably connect said hub (1) to said spacers (D). Said coupling means (18, D20) are configured to provide a grooved coupling between the spacer (D) and the hub (1).

The coupling means (18, D20) always comprise the longitudinal grooves (18) formed on the outer surface of the hub (1) and protuberances (D20) formed on a perimeter edge (D2) delimiting the hole (D1) of the spacer (D) and are coupled with said longitudinal grooves (18) of the hub (1).

The arm-holding plate (2) or arm-holding plates (2) and said spacers (D) are enclosed in a package and compressed between the stop flange (17) of the hub (1) and the cover (C).

The crusher (100) comprises tools (4a, 4b), one for each arm (3), each one being integral with a respective arm (3). The tools (4a, 4b) can either be made in one piece with the arms (3) or can be separated from the arms (3) and connected to the arms (3) by means of removable connection means (7), such as threaded elements, as shown in the attached figures.

Each one of said tools (4a, 4b) has a longitudinal axis (Ya, Yb) that extends in parallel direction to the arm (3) associated with the tool (4a, 4b) and a transverse axis (Ta, Tb) perpendicular to said longitudinal axis (Ya, Yb).

Each tool (4a, 4b) comprises a first ending edge (48) suitable for scraping the cylindrical grid (M13) of the crushing chamber (M1). The first ending edge (48) of each tool (4a, 4b) extends perpendicularly to the longitudinal axis (Ya, Yb) of the tool (4a, 4b).

Each tool (4a, 4b) also has a second ending edge (49) parallel to the first ending edge (48).

The tools (4a, 4b) comprise cutting tools (4a) connected to the arms (3) of the central sets of arms (3c, 3d) and conveyor tools (4b) connected to the arms (3) of the rear set of arms (3a) and of the front set of arms (3b).

The cutting tools (4a) and the conveyor tools (4b) have different shapes and perform different functions.

In particular, the conveyor tools (4b) are configured to push the material towards the central sets of arms (3c, 3d) during the rotation of the crusher (100) inside the crushing chamber (M1).

The cutting tools (4a) are configured to intercept and crush the material conveyed by the conveyor tools (4b) during the rotation of the crusher (100).

Each tool (4a, 4b) has a working face (40a, 40b) facing in the same direction as the rotational direction of the hub (1). The working face (40a, 40b) is provided at the ends with said first ending edge (48) and said second ending edge (49).

The peculiarity of the crushing tools (4a) consists in the fact that the working face (40a) is symmetrical with respect to the central plane (Qc, Qd) passing through the longitudinal axis (Ya) of the tool (4a). Otherwise said, the central plane (Qc, Qd) divides the working face (40a) into two identical and symmetrical lateral surfaces (400a).

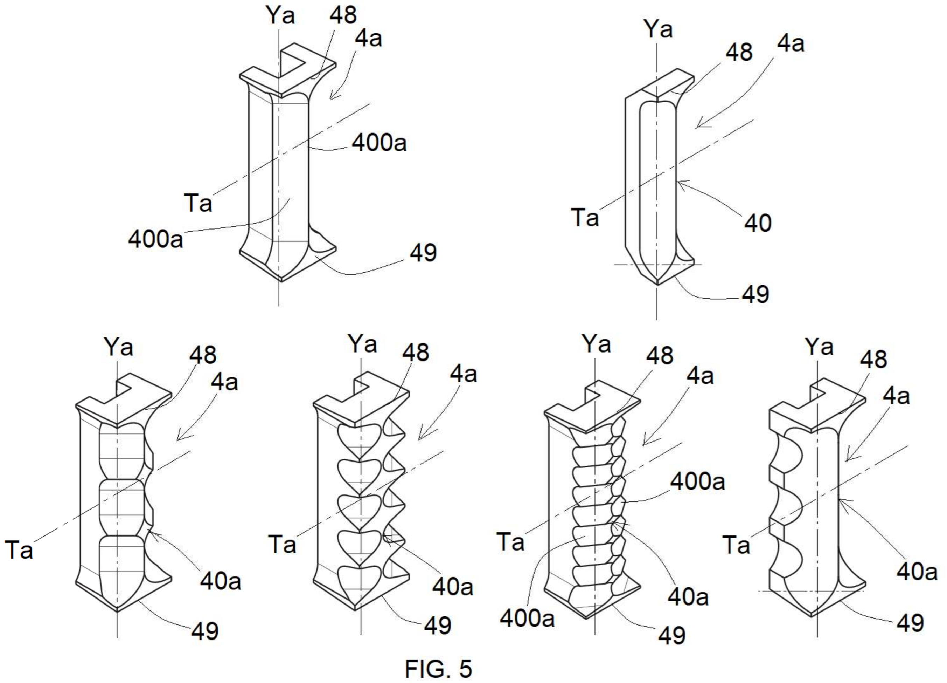

By way of example, Fig. 5 shows six different types of crushing tools (4a). Without prejudice to the aforementioned condition whereby the two lateral surfaces (400a) are symmetrical, the lateral surfaces (400a) may have different shapes depending on the specific requirements. For example, the lateral surfaces (400a) may be smooth and convergent so as to define a longitudinal cutting edge, or they may be faceted.

Now with reference to the conveyor tools (4b), the working face (40b) of said conveyor tools (4b) comprises an outer longitudinal edge (41b) suitable for scraping the rear wall (M11) or the front wall (M12) of the crushing chamber (M1), and an inner longitudinal edge (42b) facing the central sets of arms (3c, 3d).

Considering the rotational direction of the crusher (100), the outer edge (41b) of the working face (40b) of the conveyor tool (4b) is advanced with respect to the inner edge (42b) of the working face (40b) of the conveyor tool (4b).

In particular, the working face (40b) of the conveyor tool (4b) slopes towards the central sets of arms (3c, 3d) and is inclined with respect to the rear plane (Qa) or to the front plane (Qb) by an angle (α) that is greater than 90°, preferably comprised between 100° and 130°.

The particular shape of the conveyor tools (4b) allows them to work like a blade that grazes the front wall (M12) or the rear wall (M11) to collect and convey the material disposed in the wall (M11, M12) towards the crushing tools (4a) that are integral with the arms (3) of the central sets of arms (3c, 3d).

It should be noted that although the attached figures always show a crusher (100) comprising two central sets of arms (3c, 3d) interposed between the front set of arms (3b) and the rear set of arms (3a), nothing would change if the crusher (100) only had one central set of arms or more than two central sets of arms.

Furthermore, although the attached figures always show that each set of arms (3a, 3b, 3c, 3d) comprises two arms (3), nothing prevents the realization of sets of arms (3a, 3b, 3c, 3d) comprising one arm (3) or a number of arms (3) higher than two.

Numerous modifications can be made to the present embodiment of the invention, which are within the reach of an expert of the field and fall in any case within the scope of the invention as disclosed by the attached claims.

## Claims

1. Crusher (100) of a crushing machine (M) for oleaginous fruits, such as olives and the like; wherein said crushing machine (M) comprises a crushing chamber (M1) bounded by a rear wall (M11) posteriorly, by a front wall (M12) anteriorly and by a cylindrical grid (M13) perimetrically; the crushing machine (M) further comprises a shaft (A) which passes through the rear wall (M11), has an axis of rotation (X) and is suitable for being connected to drive means of the crushing machine so as to be rotated about the axis of rotation (X);
wherein said crusher (100) comprises:
- a hub (1) with an axis (X1) that is suitable for being rotatably connected with said shaft (A);
- arms (3) integral with the hub (1) and projecting from the hub (1);
- tools (4a, 4b), one for each arm (3), integral with the arms (3);
**characterized by** the fact that
it comprises at least three sets of arms (3a, 3b, 3c, 3d) arranged side by side along the hub (1), namely:
- a rear set of arms (3a) comprising at least one arm (3) lying on a rear plane (Qa) orthogonal to the axis (X1) of the hub (1);
- a front set of arms (3b) comprising at least one arm (3) lying on a front plane (Qb) orthogonal to the axis (X1) of the hub (1);
- at least one central set of arms (3c, 3d) comprising at least one arm (3) lying on a central plane (Qc, Qd), which is interposed between the front plane (Qb) and the rear plane (Qa) and orthogonal to the axis (X1) of the hub (1);
wherein each one of said tools (4a, 4b) has a longitudinal axis (Ya, Yb) extending parallel to the arm (3) associated with the tool (4a, 4b) and comprises a first ending edge (48) extending perpendicularly to the longitudinal axis (Ya, Yb) and suitable for scraping the cylindrical grid (M13);
wherein each tool (4a, 4b) has a working face (40a, 40b) facing in the same direction as the rotational direction of the hub (1);
wherein said tools (4a, 4b) comprise cutting tools (4a) connected to the arms (3) of the at least one central set of arms (3c, 3d), and conveyor tools (4b) connected to the arms (3) of the rear set of arms (3a) and of the front set of arms (3b);
wherein the conveyor tools (4b) are configured to push the material disposed in the crushing chamber (M1) towards the central sets of arms (3c, 3d) during the rotation of the crusher (100) inside the crushing chamber (M1);
wherein the cutting tools (4a) are configured to intercept and crush the material conveyed by the conveyor tools (4b) during the rotation of the crusher (100).

2. The crusher (100) according to claim 1, wherein the working face (40b) of each conveyor tool (4b) comprises an outer longitudinal edge (41b) suitable for scraping the rear wall (M11) or the front wall (M12) of the crushing chamber (M1), and an inner longitudinal edge (42b) facing the central sets of arms (3c, 3d).

3. The crusher (100) according to claim 2, wherein the outer edge (41b) of the working face (40b) of the conveyor tool (4b) is advanced with respect to the inner edge (42b) of the working face (40b) of the conveyor tool (4b).

4. The crusher (100) according to any of the preceding claims, wherein said working face (40b) slopes toward the central sets of arms (3c, 3d) and is inclined relative to the rear plane (Qa) or to the front plane (Qb) by an angle (α) that is greater than 90°.

5. The crusher (100) according to any of the preceding claims, wherein the working face (40a) of each crushing tool (4a) is symmetrical with respect to the central plane (Qc, Qd) of the central set of arms (3c, 3d) passing through the longitudinal axis (Ya) of the crushing tool (4a).

6. The crusher (100) according to any of the preceding claims, wherein the at least one arm (3) of the at least one central set of arms (3c, 3d) is offset with respect to the at least one arm (3) of the rear set of arms (3a) and of the front set of arms (3b); wherein the at least one arm (3) of the rear set of arms (3a) and of the front set of arms (3b) are not offset.

7. The crusher (100) according to any of the preceding claims, comprising two central sets of arms (3c, 3d) interposed between the rear set of arms (3a) and the front set of arms (3b); wherein the arms (3) of the two central sets of arms (3c, 3d) are offset.

8. The crusher (100) according to any of the preceding claims, comprising removable connection means (7) for each arm (3) to removably connect each tool (4a, 4b) to the respective arm (3).

9. The crusher (100) according to any of the preceding claims, comprising an arm-holding plate (2) for each set of arms (3a, 3b, 3c, 3d), incorporating the at least one arm (3) of the respective set of arms (3a, 3b, 3c, 3d); wherein said arm-holding plate (2) has a central hole (20) suitable for fitting the hub (1).

10. Crushing machine (M) for oleaginous fruits, such as olives and the like; wherein said crushing machine (M) comprises:
- a crushing chamber (M1) suitable for containing oleaginous fruits; the crushing chamber (M1) is bounded by a rear wall (M11) posteriorly, by a front wall (M12) anteriorly, and by a cylindrical grid (M13) perimetrically;
- a shaft (A) passing through the rear wall (M11) of the crushing chamber (M1), said shaft (A) having an axis of rotation (X) and being suitable for being connected to drive means (Q1) of the crushing machine so as to be rotated about the axis of rotation (X);
- a feed system for feeding the oleaginous fruits into the crushing chamber (M1);
- a discharge outlet for discharging the puree obtained from crushing the oleaginous fruits;
- the crusher (100) according to any of the preceding claims connected to the shaft (A); wherein the first ending edges (48) of the tools (4a, 4b) of the crusher (100) are suitable for scraping the cylindrical grid (M13); wherein the conveyor tools (4b) are suitable for scraping the rear wall (M11) or the front wall (M12) of the crushing chamber (M1) to collect and convey the material deposited on the walls (M11, M12) towards the central sets of arms (3c, 3d).
